# EUROPEAN PATENT APPLICATION

(11) **EP 4 482 184 A1**
(43) Date of publication of application: **25.12.2024**
(21) Application number: 22929638.9
(22) Date of filing: 12.12.2022
(51) Int. Cl.: H04W 4/80, H04W 4/40

(54) **COMMUNICATION METHOD AND DEVICE**

(30) Priority: 04.03.2022 CN 202210211057
(71) Applicant: Huawei Technologies Co., Ltd., Shenzhen, Guangdong 518129 (CN)
(72) Inventor: CHENG, Bo, Shenzhen, Guangdong 518129 (CN); WANG, Jian, Shenzhen, Guangdong 518129 (CN); SUN, Defu, Shenzhen, Guangdong 518129 (CN); CHENG, Xingqing, Shenzhen, Guangdong 518129 (CN)
(74) Representative: Huawei European IPR
(86) International application number: PCT/CN2022/138403
(87) International publication number: WO 2023/165211

(57) **Abstract**

Embodiments of this application belong to the field of communication technologies, and provide a communication method and an apparatus. In the method, a first node may send first measurement configuration information to a second node (S301), where the first measurement configuration information indicates to measure synchronization information of a third node on a first channel. Further, the second node may obtain the synchronization information (S302), and the first node receives the synchronization information from the second node (S303), where the synchronization information may indicate one or more of the following information of the third node: time synchronization information, frequency synchronization information, synchronization communication domain set information, reference signal received power RSRP, reference signal received quality RSRQ, a signal to interference plus noise ratio SINR, or a received signal strength indicator RSSI. In this way, time-frequency synchronization between different nodes in a communication system can be implemented, interference between the different nodes can be effectively reduced, and system communication performance can be improved.

## Description

### CROSS-REFERENCE TO RELATED APPLICATIONS

This application claims priority to Chinese Patent Application No. 202210211057.0, filed with the China National Intellectual Property Administration on March 4, 2022 and entitled "COMMUNICATION METHOD AND APPARATUS", which is incorporated herein by reference in its entirety.

### TECHNICAL FIELD

This application relates to the field of communication technologies, and in particular, to a communication method and an apparatus, which may be applied to fields such as intelligent driving, smart homes, and intelligent manufacturing.

### BACKGROUND

With rapid development of communication technologies, a short-range communication system has a plurality of new service scenarios, for example, intelligent vehicles, intelligent manufacturing, or smart homes. Transmission requirements of these new service scenarios include at least one of the following characteristics: a low latency, high reliability, high networking density, a high concurrency quantity, high security, or a large capacity. However, in a current short-range communication system (for example, wireless fidelity (WI-FI) and Bluetooth (BT)), an asynchronous system is mostly used. A node in the asynchronous system needs to obtain a channel in a reservation preemption manner, or obtain a channel by performing a listening avoidance mechanism. Consequently, transmission efficiency of the asynchronous system is low. Especially in a high-networking-density scenario, nodes in the asynchronous system interfere with each other. As a result, reliability of the asynchronous system is reduced, and user experience deteriorates.

Therefore, how to reduce interference between nodes and improve transmission efficiency and reliability of the short-range communication system is an urgent technical problem that needs to be resolved.

### SUMMARY

Embodiments of this application provide a communication method and an apparatus, to implement time-frequency synchronization between different nodes, reduce interference between the different nodes, and improve transmission performance of a communication system.

According to a first aspect, a communication method is provided. The method may be applied to a first node, and the method includes: sending first measurement configuration information to a second node, where the first measurement configuration information indicates to measure synchronization information of a third node on a first channel; and receiving synchronization information from the second node, where the synchronization information indicates one or more of the following information of the third node: time synchronization information, frequency synchronization information, synchronization communication domain set information, reference signal received power RSRP, reference signal received quality RSRQ, a signal to interference plus noise ratio SINR, or a received signal strength indicator RSSI.

In some embodiments, the synchronization information may also be referred to as first measurement result information.

It may be understood that the communication method is applicable to a scenario in which the first node has established a service. According to the method in this embodiment of this application, the first node may obtain the synchronization information of the third node on the first channel (namely, a to-be-measured channel) through the second node. In this way, synchronization information of a node on the first channel can be obtained without affecting the service of the first node, to implement time-frequency synchronization between a plurality of nodes.

The time synchronization information may be understood as information related to time synchronization of the third node.

In a possible implementation, the time synchronization information includes a first time deviation between the third node and the first node. The first time deviation may be understood as a difference between clock values of the first node and the third node at a first moment, or may be understood as an error between transmission start moments of time units of the first node and the third node. In this implementation, after receiving the time synchronization information, the first node may directly establish time synchronization with the third node based on the time synchronization information. This effectively improves efficiency of establishing time synchronization between the first node and the third node.

In another possible implementation, the time synchronization information may include a clock value of the third node and/or a transmission start moment of a time unit of the third node. In this implementation, after receiving the time synchronization information, the first node needs to determine the first time deviation between the third node and the first node based on the time synchronization information, and establish time synchronization with the third node based on the first time deviation. In this way, the first time deviation determined by the first node is more accurate, so that time synchronization established between the first node and the third node is more accurate.

The frequency synchronization information may be understood as information related to frequency synchronization of the third node.

In a possible implementation, the frequency synchronization information includes a first frequency deviation between the third node and the first node. The first frequency deviation may be understood as a carrier frequency error between the first node and the third node at the first moment, and the carrier frequency error may be understood as a relative error/an absolute error between actual frequencies of the first node and the third node. In this implementation, after receiving the frequency synchronization information, the first node may directly establish frequency synchronization with the third node based on the frequency synchronization information. This effectively improves efficiency of establishing frequency synchronization between the first node and the third node.

In another possible implementation, the frequency synchronization information may include a carrier frequency of the third node. In this implementation, after receiving the frequency synchronization information, the first node needs to determine the first frequency deviation between the third node and the first node based on the frequency synchronization information, and establish frequency synchronization with the third node based on the first frequency deviation. In this way, the first frequency deviation determined by the first node is more accurate, so that frequency synchronization established between the first node and the third node is more accurate.

The synchronization communication domain set information may be understood as information about a synchronization communication domain set formed by establishing time-frequency synchronization between a node on the first channel and another first-type node. The first-type node may be understood as a G node and/or a T node. This is not specifically limited in embodiments of this application.

In a possible implementation, the synchronization communication domain set information includes one or more of the following: a topology relationship of the synchronization communication domain set, priority information of the third node, a quantity of first-type nodes included in the synchronization communication domain set, or a status of synchronization between the third node and a first-type node other than the third node in the synchronization communication domain set. The topology relationship of the synchronization communication domain set may be understood as a relationship between a root node and a parent node in the synchronization communication domain set, and the topology relationship may be represented by a node identifier. The priority information of the third node may be understood as a priority of establishing time-frequency synchronization between the first node and the third node. The synchronization status may be understood as synchronization between the third node and the first-type node other than the third node in the synchronization communication domain set. In this implementation, the synchronization communication domain set information includes one or more types of information. When the third node is a plurality of nodes, the first node may determine a synchronization source node based on the synchronization communication domain set information, so that time-frequency synchronization of the first node is more appropriate.

In a possible implementation, the first measurement configuration information may further indicate a measurement object, a first periodicity corresponding to a measurement resource, duration of the measurement resource in the first periodicity, an offset of the measurement resource in the first periodicity, a start time domain location number of the measurement resource, or a quantity of measurement resources. The measurement object includes one or more of the following: the reference signal received power, the reference signal received quality, the signal to interference plus noise ratio, the received signal strength indicator, synchronization communication domain set measurement, time adjustment measurement, or frequency adjustment measurement, where the measurement resource is a time resource for measuring the first channel. The "measurement resource" may be understood as a time resource used by the second node to measure the synchronization information of the third node on the first channel. A time unit of the time resource may be, for example, a super frame, a radio frame (radio frame), a symbol (symbol), or another time unit. The "duration of the measurement resource in the first periodicity" may be understood as a time unit occupied by the measurement resource in the first periodicity. The "start time domain location number of the measurement resource" may be understood as a number corresponding to a time resource that indicates that the second node starts measurement, for example, may be a number of a super frame that indicates that the second node starts measurement. The "quantity of measurement resources" may be understood as a quantity of time units corresponding to the time resource used by the second node to measure the synchronization information of the third node on the first channel, for example, may be a quantity of super frames, radio frames, symbols, or other time units. In this implementation, the first measurement configuration information may indicate one or more measurement objects, so that the second node measures the first channel more pertinently.

In a possible implementation, the synchronization information is for establishing time-frequency synchronization between the first node and the third node. Correspondingly, the first node may establish time-frequency synchronization with the third node based on the synchronization information. In this way, time-frequency synchronization between different nodes can be effectively implemented.

In a possible implementation, the method further includes: sending information about synchronization adjustment between the first node and the third node, where the synchronization adjustment information may indicate a second-type node in a first synchronization area to establish time-frequency synchronization with the third node, and the first synchronization area is a synchronization area to which the first node belongs. In this embodiment of this application, the first synchronization area may be understood as a synchronization communication domain set formed by establishing time-frequency synchronization between the first node and the second-type node. The second-type node may be a T node or a terminal node. It may be understood that, in some embodiments, the synchronization information includes frequency adjustment information and time adjustment information. Correspondingly, the first node may send the synchronization information to the second-type node as the synchronization adjustment information. In some embodiments, the synchronization information includes frequency information and time information. The first node may further determine, based on the synchronization information, frequency adjustment information, time adjustment information, and a moment at which synchronization adjustment takes effect, and send the frequency adjustment information, the time adjustment information, and the moment at which the synchronization adjustment takes effect to the second-type node as the synchronization adjustment information. In this implementation, the first node sends the synchronization adjustment information to the second-type node in the first synchronization area to which the first node belongs, so that the second-type node may establish time-frequency synchronization with the third node, to further implement time-frequency synchronization between a plurality of nodes.

In a possible implementation, after the first node establishes time-frequency synchronization with the third node, the first node may further send second measurement configuration information to the second node, where the second measurement configuration information indicates to measure updated synchronization information of the third node; and receive the updated synchronization information from the second node, where the updated synchronization information indicates a second time deviation and/or a second frequency deviation between the third node and the first node. In some embodiments, the synchronization information may also be referred to as second measurement result information. The second time deviation may be understood as a difference between clock values of the first node and the third node at a second moment, or may be understood as an error between transmission start moments of time units of the first node and the third node. The second frequency deviation may be understood as a carrier frequency error between the first node and the third node at the second moment. In this implementation, the first node may obtain the updated synchronization information of the third node through the second node again, to implement synchronization tracking of the third node, so that time-frequency synchronization between the first node and the third node is more accurate.

In a possible implementation, the method further includes: determining, by the first node, the second node based on a service priority and/or load information of the second-type node in the first synchronization area. It may be understood that the second node may be one or more nodes. In this implementation, the first node may select, based on the service priority and/or the load information of the second-type node, the second node configured for synchronization information measurement, to effectively avoid impact of the synchronization information measurement on services of some second-type nodes, so as to effectively improve user experience.

In a possible implementation, that the first node sends first measurement configuration information to a second node includes: sending the first measurement configuration information to the second node in response to detecting a first event, where the first event includes one or more of the following: The first node is powered on, communication quality of a communication system to which the first node belongs is lower than a preset standard, a software module of the first node is started based on a preset configuration, or the first node is in a status of not being synchronized with any node; or sending the first measurement configuration information to the second node when a start time domain location of the first periodicity is reached. In this implementation, a specific event may be used to trigger the first node to send the first measurement configuration information to the second node, or the first node periodically sends the first measurement configuration information to the second node, so that time-frequency synchronization of the first node is more appropriate.

According to a second aspect, an embodiment of this application further provides a communication method. The method may be applied to a second node, and the method includes: receiving a first measurement configuration apparatus, where the first measurement configuration information is for measuring synchronization information of a third node on a first channel; obtaining synchronization information, where the synchronization information indicates one or more of the following information of the third node: time synchronization information, frequency synchronization information, synchronization communication domain set information, reference signal received power RSRP, reference signal received quality RSRQ, a signal to interference plus noise ratio SINR, or a received signal strength indicator RSSI; and sending the synchronization information to a first node.

In a possible implementation, the time synchronization information includes a first time deviation between the third node and the first node.

In a possible implementation, the frequency synchronization information includes a first frequency deviation between the third node and the first node.

In a possible implementation, the synchronization communication domain set information includes one or more of the following: a topology relationship of the synchronization communication domain set, priority information of the third node, a quantity of first-type nodes included in the synchronization communication domain set, or a status of synchronization between the third node and a first-type node other than the third node in the synchronization communication domain set.

In a possible implementation, the first measurement configuration information further indicates a measurement object, a first periodicity corresponding to a measurement resource, duration of the measurement resource in the first periodicity, an offset of the measurement resource in the first periodicity, a start time domain location number of the measurement resource, or a quantity of measurement resources. The measurement object includes one or more of the following: the reference signal received power, the reference signal received quality, the signal to interference plus noise ratio, the received signal strength indicator, synchronization communication domain set measurement, time adjustment measurement, or frequency adjustment measurement, where the measurement resource is a time resource for measuring the first channel.

In a possible implementation, the synchronization information is for establishing time-frequency synchronization between the first node and the third node.

In a possible implementation, the method further includes: receiving information about synchronization adjustment between the first node and the third node, where the synchronization adjustment information is for establishing time-frequency synchronization between the second node and the third node, and the second node and the first node belong to a first synchronization area.

In a possible implementation, the method further includes: receiving second measurement configuration information, where the second measurement configuration information is for measuring updated synchronization information of the third node; obtaining the updated synchronization information; and sending the updated synchronization information to the first node, where the updated synchronization information indicates a second time deviation and/or a second frequency deviation between the third node and the first node.

According to a third aspect, an embodiment of this application further provides another communication method, applied to a first node. The method includes: receiving first information from a third node, where the first information indicates one or more of the following of the third node: time synchronization information, frequency synchronization information, synchronization communication domain set information, reference signal received power RSRP, reference signal received quality RSRQ, a signal to interference plus noise ratio SINR, or a received signal strength indicator RSSI; and establishing time-frequency synchronization with the third node.

It may be understood that the communication method is applicable to a scenario in which the first node is just powered on and has not established a service or a scenario in which a service of the first node is in an idle state (for example, in the early morning or no terminal node is currently connected).

According to the method in this embodiment of this application, the first node may directly obtain synchronization information of the third node from the third node, and establish time-frequency synchronization with the third node. This effectively improves efficiency of establishing time-frequency synchronization by the first node.

In a possible implementation, the first information is carried in a broadcast message, a unicast message, or a multicast message. In other words, the third node may send the synchronization information to the first node in a plurality of manners.

According to a fourth aspect, an embodiment of this application further provides a communication apparatus, including a unit configured to implement the method according to the first aspect or any one of the possible implementations of the first aspect, or including a unit configured to implement the method according to the third aspect or any one of the possible implementations of the third aspect.

According to a fifth aspect, an embodiment of this application further provides a communication apparatus, including a unit configured to implement the method according to the second aspect or any one of the possible implementations of the second aspect.

According to a sixth aspect, an embodiment of this application further provides a chip system, including at least one processor and an interface circuit. The processor is configured to execute instructions and/or data exchange through the interface circuit, so that the chip system performs the method according to the first aspect or any one of the possible implementations of the first aspect, or performs the method according to the third aspect or any one of the possible implementations of the third aspect.

According to a seventh aspect, an embodiment of this application further provides a chip system, including at least one processor and an interface circuit. The processor is configured to execute instructions and/or data exchange through the interface circuit, so that the chip system performs the method according to the second aspect or any one of the possible implementations of the second aspect.

According to an eighth aspect, an embodiment of this application further provides a terminal, including the apparatus according to the fourth aspect or the chip system according to the sixth aspect, and/or the apparatus according to the fifth aspect or the chip system according to the seventh aspect.

According to a ninth aspect, an embodiment of this application further provides a computer-readable storage medium. The computer-readable storage medium stores instructions. When the instructions are run on a computer, the computer is enabled to perform the method according to the first aspect or any one of the possible implementations of the first aspect, or perform the method according to the second aspect or any one of the possible implementations of the second aspect, or perform the method according to the third aspect or any one of the possible implementations of the third aspect.

According to a tenth aspect, an embodiment of this application further provides a computer-readable storage medium. The computer-readable storage medium stores instructions. When the instructions are run on a computer, the computer is enabled to perform the method according to the first aspect or any one of the possible implementations of the first aspect, or perform the method according to the second aspect or any one of the possible implementations of the second aspect, or perform the method according to the third aspect or any one of the possible implementations of the third aspect.

For beneficial effects corresponding to the second aspect, the fourth aspect, and the tenth aspect, refer to related descriptions of the first aspect or the third aspect. Details are not described herein again.

### BRIEF DESCRIPTION OF DRAWINGS

FIG. 1 is a diagram of a super frame according to an embodiment of this application;
FIG. 2 is a diagram of a possible application scenario according to an embodiment of this application;
FIG. 3 is a schematic flowchart 1 of a first communication method according to an embodiment of this application;
FIG. 4 is a schematic flowchart 2 of a first communication method according to an embodiment of this application;
FIG. 5 is a diagram of a synchronization communication domain set according to an embodiment of this application;
FIG. 6 is a schematic flowchart 3 of a first communication method according to an embodiment of this application;
FIG. 7 is a diagram of time-frequency synchronization of a first node according to an embodiment of this application;
FIG. 8 is a schematic flowchart of a second communication method according to an embodiment of this application;
FIG. 9 is a diagram of a structure of an apparatus according to an embodiment of this application; and
FIG. 10 is a diagram of another structure of an apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following describes some terms in embodiments of this application, to facilitate understanding of a person skilled in the art.

### 1. Time-frequency synchronization

The time-frequency synchronization includes time synchronization and frequency synchronization. The time synchronization refers to adjusting clock values of different nodes to specific accuracy or specific tolerance, or adjusting an error between transmission start moments of time units of different nodes to a specific range. A unit of the time unit may be a super frame, a radio frame (radio frame), a symbol (symbol), another time unit, or the like. The super frame is a time unit including a plurality of radio frames, the radio frame is a time unit smaller than the super frame, and the symbol is a time unit smaller than the radio frame. For example, in a vehicle-mounted wireless short-range communication system, it is specified that a length of a radio frame is 1/48 ms = 20.833 µs, each super frame includes 48 radio frames, and a length of each super frame is 1 ms. In an example, as shown in FIG. 1, one super frame includes 48 radio frames, and the 48 radio frames are sequentially a radio frame #0 to a radio frame #47. Each radio frame includes 10 symbols. In the 10 symbols, four symbols are used for downlink transmission, three symbols are used for uplink transmission, two symbols are used as a gap (gap, GAP), and one symbol is used as a flexible symbol. The flexible symbol may be used for uplink transmission, or may be used for downlink transmission, or may be used for other transmission. This is not limited. In the vehicle-mounted (or non-vehicle-mounted) wireless short-range communication system, an uplink usually refers to a direction in which a terminal (terminal, T) node sends data or information to a grant (grant, G) node, and may be represented by "T". A downlink usually refers to a direction in which the G node sends data or information to the T node, and may be represented by "G". In the vehicle-mounted wireless short-range communication system, there is usually a communication requirement between different T nodes or between different G nodes, and communication between the different T nodes or between the different G nodes may occupy the flexible symbol. In FIG. 1, the flexible symbol is represented as a special grant (special grant, SG). Explanations of the frame and the super frame may be applied to the following embodiments. The G node and the T node herein are merely a distinction for node functions, and do not limit specific node names. For example, the node may be a communication node in a sparklink short-range communication standard, or may be a communication node in a short-range communication system like Bluetooth. A type of the communication system is not specifically limited in this application.

The frequency synchronization means that carrier frequency errors of different nodes each are maintained within a specific range. The carrier frequency errors of the different nodes each may refer to a relative error/an absolute error between an actual frequency and an expected frequency of a node, a relative error/an absolute error between actual frequencies of the different nodes, or the like. The frequency synchronization may also be referred to as frequency orthogonality. For example, a subcarrier frequency used by a node 1 is f0, and a subcarrier frequency used by a node 2 is f1. If a difference between f1 and f0 is an integer multiple of a subcarrier spacing or is close to an integer multiple of a subcarrier spacing, but the difference between f1 and f0 meets a specific constraint, it is considered that frequencies used by the node 1 and the node 2 are orthogonal. Otherwise, it is considered that frequencies used by the node 1 and the node 2 are not orthogonal. The constraint may be determined based on factors such as a system anti-interference capability and a service feature.

For example, in an implementation, if the T node needs to establish time synchronization with the G node, the T node needs to obtain a start location and an end location at which the G node sends symbols. If duration of the T node from the start location to the end location is consistent with that of the G node, the T node establishes time synchronization with the G node. The T node needs to obtain a carrier frequency of the G node, so that an error between a carrier frequency of the T node and the carrier frequency of the G node is maintained within a specific range, and the T node establishes frequency synchronization with the G node. For example, the carrier frequency error between the T node and the G node may be 100 Hz.

### 2. First node

In embodiments of this application, the first node may be understood as a node that needs to perform time-frequency synchronization. Optionally, in some embodiments, the first node may be a G node.

### 3. Second node

In embodiments of this application, the second node may be understood as a node configured to replace the first node to measure synchronization information of a node on a first channel. Optionally, in some embodiments, the second node may be a node that is located in a same synchronization area as the first node.

### 4. Third node

In embodiments of this application, the third node may be understood as a node obtained by the second node through measurement on the first channel. The third node may be one or more nodes. This is not specifically limited in embodiments of this application.

### 5. Measurement configuration information

In embodiments of this application, the measurement configuration information may be understood as information configured by the first node for the second node, and the information may be information used to measure synchronization information of a node on the first channel, for example, first measurement configuration information and second measurement configuration information. The first measurement configuration information may indicate the first channel, a measurement object, a first periodicity corresponding to a measurement resource, duration of the measurement resource in the first periodicity, an offset of the measurement resource in the first periodicity, a start time domain location number of the measurement resource, or a quantity of measurement resources. The second measurement configuration information may indicate to measure updated synchronization information of the third node on the first channel.

The first channel may be understood as a to-be-measured channel specified by the first node. In some possible embodiments, the first channel may be represented by a channel frequency corresponding to the first channel.

The measurement object may be understood as a type of to-be-measured information on the first channel. In some possible embodiments, the measurement object includes one or more of the following: reference signal received power (RSRP), reference signal received quality (RSRQ), signal to interference plus noise ratio (SINR), received signal strength indicator (received signal strength indicator, RSSI), synchronization communication domain set measurement, time adjustment measurement, or frequency adjustment measurement.

In embodiments of this application, a synchronization communication domain set may also be referred to as a synchronization group, and may be understood as a set formed by establishing time-frequency synchronization between a plurality of first-type nodes. The first-type node may be a G node and/or a T node. This is not limited in embodiments of this application. For example, a node G1 establishes time-frequency synchronization with a node G2, and the node G1 and the node G2 may form a synchronization communication domain set. For another example, a node G1 establishes time-frequency synchronization with a node T1, and the node G1 and the node T1 may form a synchronization communication domain set. Correspondingly, the synchronization communication domain set measurement may be understood as measuring information about a synchronization communication domain set to which a node on the first channel belongs.

The synchronization communication domain set information may be understood as information about a synchronization communication domain set formed by establishing time-frequency synchronization between a node on the first channel and another first-type node. In some possible embodiments, the synchronization communication domain set information may include but is not limited to one or more of the following: a topology relationship of the synchronization communication domain set, priority information of the third node, a quantity of first-type nodes included in the synchronization communication domain set, or a status of synchronization between the third node and a first-type node other than the third node in the synchronization communication domain set. The first-type node may be understood as a G node and/or a T node. This is not specifically limited in embodiments of this application. The topology relationship of the synchronization communication domain set may be understood as a relationship between a root node and a parent node in the synchronization communication domain set, and the topology relationship may be represented by a node identifier. The root node is an initial node in the synchronization communication domain set, and another node in the synchronization communication domain set directly or indirectly joins the synchronization communication domain set through the root node. A synchronization path is a connection path from the root node to a current node. For example, if the current node joins the synchronization communication domain set through the parent node, and the parent node joins the synchronization communication domain set through the root node, a synchronization path is formed by using the current node, the parent node, and the root node. The priority information of the third node may be understood as a priority of establishing time-frequency synchronization between the first node and the third node. The synchronization status may be understood as synchronization between the third node and the first-type node other than the third node in the synchronization communication domain set.

For example, it is assumed that the synchronization communication domain set includes five G nodes: G1, G2, G3, G4, and G5. The synchronization communication domain set information includes a node identifier, a synchronization status, and a synchronization direction. As shown in Table 1, the node identifier may specifically refer to identifiers of G1 to G5 in Table 1, and the synchronization status may be represented by a binary value "0" or "1". For example, a synchronization status of the node G1 is 1, which may be specifically that the node G1 maintains time-frequency synchronization with the node G1 and the node G2 separately, and the node G1 does not maintain direct time-frequency synchronization with the node G3, the node G4, and the node G5. The synchronization direction may be a synchronization direction of each node. For example, "1" indicates that Gx performs time-frequency synchronization with Gy. For example, if G1 ->G2 is " 1", it indicates that G1 performs time-frequency synchronization with G2. To be specific, time-frequency of G1 is adjusted based on time-frequency of G2, G2 is a parent node of the time-frequency synchronization, and G1 is a child node of the time-frequency synchronization. "0" indicates that Gx does not perform time-frequency synchronization with Gy. For example, if G2->G1 is 0, it indicates that G2 does not perform time-frequency synchronization with G1. To be specific, the time-frequency of G2 is not adjusted based on the time-frequency of G1.

It should be noted that time-frequency synchronization in Table 1 is directional. For example, if G1 performs time-frequency synchronization with G2, that is, the time-frequency of G1 is adjusted based on the time-frequency of G2, a value of G1->G2 is "1". However, on the contrary, if G2 does not perform time-frequency synchronization with G1, that is, the time-frequency of G2 is not adjusted based on the time-frequency of G1, a value of G2->G 1 is "0". It should be noted herein that the table is merely a representation form of a relationship. In a specific implementation, it is not limited to only the manner of using the table. Any other manner in which corresponding information can be reflected may be used in implementations of this application.

**Table 1**

| | G1 | G2 | G3 | G4 | G5 |
|---|---|---|---|---|---|
| G1 | 1 | 1 | 0 | 0 | 0 |
| G2 | 0 | 1 | 1 | 0 | 0 |
| G3 | 0 | 0 | 1 | 1 | 0 |
| G4 | 0 | 0 | 0 | 1 | 1 |
| G5 | 0 | 0 | 0 | 0 | 1 |

In addition, the time adjustment measurement may be understood as measuring time synchronization information of a node on the first channel. The time synchronization information may be understood as information related to time synchronization of the third node. In some possible embodiments, the time synchronization information may include a first time deviation between the third node and the first node. The first time deviation may be understood as a difference between clock values of the first node and the third node at a first moment or an error between transmission start moments of time units of the first node and the third node. In some other possible embodiments, the time synchronization information may include a clock value of the third node at the first moment and/or a transmission start moment of a time unit of the third node.

In addition, the frequency adjustment measurement may be understood as measuring frequency synchronization information of a node on the first channel. The frequency synchronization information may be understood as information related to frequency synchronization of the third node. In some possible embodiments, the frequency synchronization information may include a first frequency deviation between the third node and the first node. The first frequency deviation may be understood as a carrier frequency error between the first node and the third node at the first moment, and the carrier frequency error may be understood as a relative error/an absolute error between actual frequencies of the first node and the third node. In some other possible embodiments, the frequency synchronization information may include a carrier frequency of the third node.

The "measurement resource" may be understood as a time resource used by the second node to measure the synchronization information of the third node on the first channel. A time unit of the time resource may be, for example, a super frame, a radio frame, a symbol, or another time unit. The "duration of the measurement resource in the first periodicity" may be understood as a time unit occupied by the measurement resource in the first periodicity. The "start time domain location number of the measurement resource" may be understood as a number corresponding to a time resource that indicates that the second node starts measurement, for example, may be a number of a super frame that indicates that the second node starts measurement. The "quantity of measurement resources" may be understood as a quantity of time units corresponding to the time resource used by the second node to measure the synchronization information of the third node on the first channel, for example, may be a quantity of super frames, radio frames, symbols, or other time units.

### 6. Synchronization information

In embodiments of this application, the synchronization information may be understood as information representing time-frequency synchronization of the third node. In some possible embodiments, the synchronization information may also be referred to as measurement result information. In a possible implementation, the synchronization information may indicate one or more of the following information: time synchronization information, frequency synchronization information, synchronization communication domain set information, RSRP, RSRQ, an SINR, or an RSSI. For the time synchronization information, the frequency synchronization information, and the synchronization communication domain set information, refer to the foregoing descriptions. Details are not described herein again.

It may be understood that one or more of the RSRP, the RSRQ, the SINR, or the RSSI represent signal strength of the second node for information from the third node. In another embodiment, another parameter may alternatively represent the signal received strength of the second node for the information from the third node.

### 7. Node identifier

The node identifier may be a media access control (media access control, MAC) address of a node, or a part of the MAC address of the node, for example, first n bits, last n bits, or middle n bits in the MAC address of the node, or any n bits in the MAC address of the node. The n bits may be consecutive values, non-consecutive values, or the like in the MAC address. This is not limited. A value of n is a positive integer greater than or equal to 1 and less than a quantity of bits in the MAC address. Alternatively, the node identifier may be an identifier that is generated based on the MAC address of the node and that is used to identify an identity of the node. For example, a logical operation is performed by using the MAC address of the node and a preset character, and an operation result is used as the node identifier. The logical operation may include logical exclusive OR, logical addition and subtraction, and the like. Alternatively, the node identifier may be another identifier, address, or the like that can identify the identity of the node, for example, an index or an address pre-allocated to the node.

In a possible design of the node identifier, the node identifier may be an identifier of a communication domain in which the node is located. Specifically, on a carrier used by a G node, a resource set including a resource for sending a synchronization signal, broadcast information, and G link control information by the G node and a resource that can be scheduled and configured by the G node is referred to as a communication domain of the G node or a communication domain resource of the G node, and the G node is referred to as a G node of the communication domain. One communication domain usually includes one G node and at least one T node. In this case, an identifier of the communication domain may be equivalent to an identifier of the node G, or the identifier of the node G may be referred to as the identifier of the communication domain in which the node G is located. Therefore, for a primary node in the synchronization communication domain set, a node identifier of the primary node may also be understood as an identifier (Domain ID) of a communication domain in which the primary node is located.

### 8. First synchronization area

In embodiments of this application, the first synchronization area may be understood as a synchronization communication domain set formed by establishing time-frequency synchronization between the first node and a second-type node. The second-type node may be a T node.

### 9. Broadcast information

Broadcast is an information transmission manner, and refers to a manner in which a node on a network sends information. A range to which the information can be transmitted is referred to as a broadcast domain. Another node in the broadcast domain can receive the information. Information sent in a broadcast manner may be referred to as broadcast information, and includes but is not limited to a broadcast channel and/or system information. In contrast, unicast information is information transmitted between a single sender and a single receiver through network communication. Correspondingly, multicast information is information sent by a sender to a plurality of receivers in a specified group.

It should be noted that, to clearly describe the technical solutions in embodiments of this application, words such as "first" and "second" are used in the descriptions of embodiments of this application to distinguish between same items or similar items that provide basically same functions or purposes. A person skilled in the art may understand that the words such as "first" and "second" do not limit a quantity or an execution sequence, and the words such as "first" and "second" do not indicate a definite difference. In addition, in the descriptions of this application, unless otherwise specified, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

With reference to the accompanying drawings, the following describes the technical solutions provided in embodiments of this application.

It should be noted that, in a wireless communication scenario in which an intelligent terminal is located, there are usually a plurality of communication domains in a specific communication area or range. Each communication domain includes a group of communication nodes that have a communication relationship: one G node and at least one T node. The G node manages a time-frequency resource in the communication domain, and has a function of scheduling a resource for a communication link between the T nodes in the communication domain. A node that does not belong to the communication domain may be referred to as an external node for short (including a node that has never joined the communication domain and a node that has joined the communication domain and then exited the communication domain). The external node may be converted into a T node in the communication domain through a process of joining the communication domain. In the process of joining the communication domain, the external node first needs to perform time-frequency synchronization with the communication domain, and obtain system information such as a resource configuration and a supported feature of the communication domain. In each communication domain, the T node may maintain time-frequency synchronization with the G node corresponding to the T node. A manner of synchronizing the T node with the G node is not limited in this application. When there are a plurality of communication domains in an area or a scenario, G nodes in the plurality of communication domains need to maintain time-frequency synchronization, to reduce interference between different communication domains and improve a system communication capability.

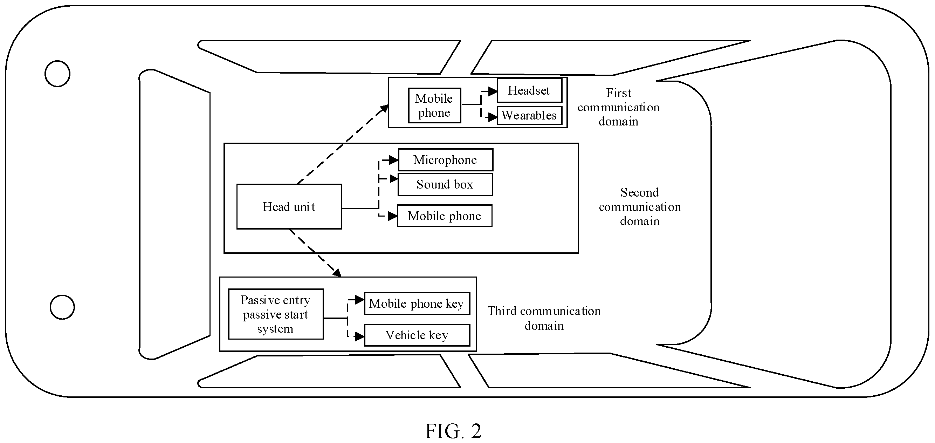

For example, FIG. 2 shows a possible application scenario according to an embodiment of this application. As shown in FIG. 2, FIG. 2 is a diagram of a topology relationship of an in-vehicle communication link. As shown in FIG. 2, there are three communication domains in a specified area (for example, an intelligent vehicle cockpit), which are respectively a first communication domain, a second communication domain, and a third communication domain. In the first communication domain, a mobile phone is used as a G node, and a headset and a wearable device are used as T nodes. In the second communication domain, a head unit is used as a G node, and a microphone, a sound box, the mobile phone, and the like are used as T nodes. In the third communication domain, a passive entry passive start system is used as a G node, and a mobile phone key and a vehicle key are used as T nodes. In this example, time-frequency synchronization needs to be maintained between the three G nodes, namely, the mobile phone, the head unit, and the passive entry passive start system.

It should be noted that, in another application scenario of embodiments of this application, a short-range wireless system includes at least one G node, and each G node accesses at least one T node. The G node may be considered as a creator of a wireless network, and is an intermediate node of the network. The G node functions as a base station or a wireless fidelity access point (wireless fidelity access point, WI-FI AP). The T node may be considered as a terminal connected to the wireless network, for example, a mobile phone, a headset, a notebook computer, or a computer. In some embodiments, a mobile phone may be used as a G node, and a headset that belongs to a same user as the mobile phone may be used as a T node. In some other embodiments, a plurality of G nodes may be arranged in a conference room, and other terminal devices in the conference room may be used as T nodes, for example, a wireless sound box and a mobile phone, to access any one of the plurality of G nodes. Alternatively, in some other embodiments, an intelligent vehicle includes a plurality of G nodes. For an example of the G node in the intelligent vehicle, refer to FIG. 2. Subsequently, a terminal device (for example, a mobile phone) used as a G node moves to an area of the intelligent vehicle. In this case, the terminal device needs to maintain time-frequency synchronization with the plurality of original G nodes in the intelligent vehicle.

In conclusion, how to maintain time-frequency synchronization between a plurality of nodes (for example, between a plurality of G nodes or between a plurality of G nodes and T nodes) in a short-range wireless communication system is a technical problem to be resolved in embodiments of this application.

It should be noted that the foregoing application scenario is merely an example for description, and is not intended to limit embodiments of this application. A person of ordinary skill in the art may learn that, with network evolution and emergence of a new service scenario, the technical solutions provided in embodiments of this application are also applicable to a similar technical problem.

In view of the foregoing technical problem, embodiments of this application provide two communication methods.

A first communication method may be applied to a first node and a second node. In the method, the first node may send first measurement configuration information to the second node, where the first measurement configuration information indicates to measure synchronization information of a third node on a first channel. Further, the second node may obtain the synchronization information, and the first node may receive the synchronization information from the second node, where the synchronization information may indicate one or more of the following information of the third node: time synchronization information, frequency synchronization information, synchronization communication domain set information, RSRP reference signal received power, RSRQ reference signal received quality, an SINR signal to interference plus noise ratio, or an RSSI received signal strength indicator. It may be understood that the first communication method may be applied to a scenario in which the first node has established a service. In this way, according to the method in this embodiment of this application, the first node may obtain the synchronization information of the third node on the first channel through the second node, so that synchronization information of a node on the first channel can be obtained without affecting the service of the first node, to implement time-frequency synchronization between a plurality of nodes. The following provides detailed descriptions by using an embodiment 1.

A second communication method may be applied to a first node. The method includes: receiving first information from a third node, where the first information indicates one or more of the following information of the third node: time synchronization information, frequency synchronization information, synchronization communication domain set information, RSRP, RSRQ, an SINR, or an RSSI; and establishing time-frequency synchronization with the third node. It may be understood that the second communication method may be applied to a scenario in which the first node is just powered on and has not established a service or a scenario in which a service of the first node is in an idle state (for example, in the early morning or no terminal node is currently connected). In this way, according to the method in this embodiment of this application, the first node may directly obtain synchronization information of the third node from the third node, and establish time-frequency synchronization with the third node. This effectively improves efficiency of establishing time-frequency synchronization by the first node. The following provides detailed descriptions by using an embodiment 2.

The following describes technical features of embodiments of this application with reference to specific accompanying drawings.

### Embodiment 1

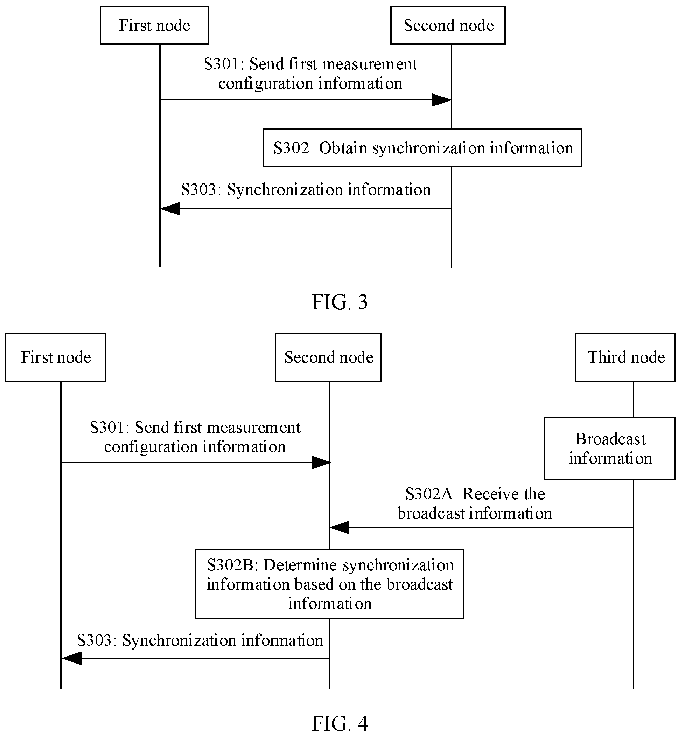

FIG. 3 is a schematic flowchart of the first communication method according to an embodiment of this application. In the following description process, an example in which a first node in a short-range communication system establishes time-frequency synchronization is used for description. In addition, a node configured to replace the first node to measure synchronization information of a node on a first channel is referred to as a second node, and a node that establishes time-frequency synchronization with the first node is referred to as a third node. Optionally, the first node and the third node may be G nodes in a wireless short-range communication system, and the second node may be a T node in the wireless short-range communication system. The method includes the following steps.

S301: The first node sends first measurement configuration information to the second node. Correspondingly, the second node receives the first measurement configuration information.

The first measurement configuration information indicates to measure synchronization information of the third node on the first channel, so that the second node may measure the synchronization information of the third node on the first channel based on the first measurement configuration information.

It may be understood that the second node may be one or more nodes. This is not specifically limited in embodiments of this application. In a possible implementation, the second node may be a second-type node in a first synchronization area to which the first node belongs. The second-type node may be all T nodes or terminal nodes in the first synchronization area.

Optionally, the first node may determine the second node based on a service priority and/or load information of the second-type node in the first synchronization area. Optionally, the service priority of the second-type node may be represented by a type of a service (for example, a video service or a voice service) that is currently performed by the second-type node. In other words, a service priority of a node corresponds to a service type of the node. Optionally, the load information of the second-type node may be determined by using a quantity of tasks currently processed by the second-type node. Correspondingly, there are a plurality of cases in which the first node determines the second node, including but not limited to the following cases.

Case 1: The first node may determine the second node based on the service priority of the second-type node in the first synchronization area.

Example 1: A node T1 and a node T2 are second-type nodes in the first synchronization area. A service type of the node T1 is a video service, and a service type of the node T2 is a voice service. In this case, a service priority of the node T1 is higher, and a service priority of the node T2 is lower. The first node may determine the node T2 as the second node, and measure the synchronization information of the third node on the first channel through the node T2.

Example 2: A node T1, a node T2, and a node T3 are second-type nodes in the first synchronization area. A service type of the node T1 is a video service, and service types of the node T2 and the node T3 are voice services. In this case, a service priority of the node T1 is higher, and service priorities of the node T2 and the node T3 are lower. The first node may determine the node T2 and the node T3 as second nodes, and measure the synchronization information of the third node on the first channel through the node T2 and the node T3.

Case 2: The first node may determine the second node based on the load information of the second-type node in the first synchronization area.

For example, a node T1 and a node T2 are second-type nodes in the first synchronization area. A quantity of tasks currently processed by the node T1 is 10, and a quantity of tasks currently processed by the node T2 is 1. In this case, load of the node T1 is higher, and load of the node T2 is lower. The first node may determine the node T2 as the second node, and measure the synchronization information of the third node on the first channel through the node T2.

Case 3: The first node may determine the second node based on the service priority and the load information of the second-type node in the first synchronization area.

For example, a node T1 and a node T2 are second-type nodes in the first synchronization area. Weight coefficients corresponding to service priorities and load information of the second-type nodes are 60% and 40% respectively. If a service type of the node T1 is a video service, a quantized value corresponding to a service priority of the node T1 is 40 scores, a quantity of tasks currently processed by the node T1 is 5, and a quantized value corresponding to load information of the node T1 is 50 scores, a score corresponding to the node T1 satisfies 40 * 60% + 50 * 40% = 44. If a service type of the node T2 is a voice service, a quantized value corresponding to a service priority of the node T2 is 80 scores, a quantity of tasks currently processed by the node T2 is 10, and a quantized value corresponding to load information of the node T2 is 10 scores, a score corresponding to the node T2 satisfies 80 * 60% + 10 * 40% = 52. The score corresponding to the node T2 is higher than the score corresponding to the node T1. The first node may determine the node T2 as the second node, and measure the synchronization information of the third node on the first channel through the node T2.

It may be understood that the quantized values corresponding to the service priorities and the load information of the second nodes and the weight coefficients corresponding to the service priorities and the load information of the second nodes in Case 1 to Case 3 are merely examples rather than limitations.

In Case 1 to Case 3, the first node may select, based on the service priority and/or the load information of the second-type node, the second node that is suitable for synchronization information measurement, to effectively avoid impact of the synchronization information measurement on services of some second-type nodes, so as to effectively improve user experience.

In embodiments of this application, the first channel may be understood as a to-be-measured channel specified by the first node. In some possible embodiments, the first channel may be represented by a channel frequency corresponding to the first channel. In other words, the first measurement configuration information may indicate the to-be-measured first channel by indicating the channel frequency of the first channel.

In a possible implementation, the first measurement configuration information may further indicate a measurement object, a first periodicity corresponding to a measurement resource, duration of the measurement resource in the first periodicity, an offset of the measurement resource in the first periodicity, a start time domain location number of the measurement resource, or a quantity of measurement resources.

For ease of understanding, the following further describes the measurement object and the measurement resource.

### 1. Measurement object

In embodiments of this application, the measurement object may be understood as a type of to-be-measured information on the first channel. In some possible embodiments, the measurement object includes but is not limited to one or more of the following: RSRP, RSRQ, an SINR, an RSSI, synchronization communication domain set measurement, time adjustment measurement, or frequency adjustment measurement.

One or more of the RSRP, the RSRQ, the SINR, or the RSSI represent signal received strength of the second node for information from the third node. In some other embodiments, the signal received strength of the second node for the information from the third node may be represented by another parameter.

A synchronization communication domain set may also be referred to as a synchronization group, and may be understood as a set formed by establishing time-frequency synchronization between a plurality of first-type nodes. The first-type node may be a G node and/or a T node. This is not limited in embodiments of this application. For example, a node G1 establishes time-frequency synchronization with a node G2, and the node G1 and the node G2 may form a synchronization communication domain set. For another example, a node G1 establishes time-frequency synchronization with a node T1, and the node G1 and the node T1 may form a synchronization communication domain set. Correspondingly, the synchronization communication domain set measurement may be understood as measuring information about a synchronization communication domain set to which a node on the first channel belongs.

The time adjustment measurement may be understood as measuring time synchronization information of a node on the first channel, and the time synchronization information may be understood as information related to time synchronization of the third node.

The frequency adjustment measurement may be understood as measuring frequency synchronization information of a node on the first channel, and the frequency synchronization information may be understood as information related to frequency synchronization of the third node.

Example 1: If the measurement object includes the synchronization communication domain set measurement, after receiving the first measurement configuration information, the second node may measure a synchronization communication domain set to which the third node on the first channel belongs.

Example 2: If the measurement object includes the time adjustment measurement, after receiving the first measurement configuration information, the second node may measure the time synchronization information of the third node on the first channel. The time synchronization information of the third node may include, for example, a first time deviation between the third node and the first node. The first time deviation may be understood as a difference between clock values of the first node and the third node at a first moment, or may be understood as an error between transmission start moments of time units of the first node and the third node. For another example, the time synchronization information may include a clock value of the third node and/or a transmission start moment of a time unit of the third node.

Example 3: If the measurement object includes the frequency adjustment measurement, after receiving the first measurement configuration information, the second node may measure the frequency synchronization information of the third node on the first channel. The frequency synchronization information of the third node may include, for example, a first frequency deviation between the third node and the first node. The first frequency deviation may be understood as a carrier frequency error between the first node and the third node at a first moment, and the carrier frequency error may be understood as a relative error/an absolute error between actual frequencies of the first node and the third node. For another example, the frequency synchronization information may include a carrier frequency of the third node.

Example 4: If the measurement object includes the RSRP, the RSRQ, the SINR, and the RSSI, after receiving the first measurement configuration information, the second node may measure the signal strength of the second node for the information from the third node on the first channel, where the signal strength may be represented by the RSRP, the RSRQ, the SINR, and the RSSI.

Example 5: If the measurement object includes the synchronization communication domain set measurement, the time adjustment measurement, and the frequency adjustment measurement, after receiving the first measurement configuration information, the second node may measure the synchronization communication domain set information, the time synchronization information, and the frequency synchronization information of the third node on the first channel.

Example 6: If the measurement object includes the RSRP, the RSRQ, the SINR, the RSSI, the synchronization communication domain set measurement, the time adjustment measurement, and the frequency adjustment measurement, after receiving the first measurement configuration information, the second node may measure the synchronization communication domain set information, the time synchronization information, and the frequency synchronization information of the third node on the first channel, and measure the signal strength of the second node for the information from the third node on the first channel, where the signal strength may be represented by the RSRP, RSRQ, the SINR, and the RSSI.

### 2. Measurement resource

In embodiments of this application, the "measurement resource" may be understood as a time resource used by the second node to measure the synchronization information of the third node on the first channel. A time unit of the time resource may be, for example, a super frame, a radio frame (radio frame), a symbol (symbol), or another time unit.

Correspondingly, the "first periodicity corresponding to the measurement resource" may be a plurality of consecutive time units. The "duration of the measurement resource in the first periodicity" may be understood as a time unit occupied by the measurement resource in the first periodicity. The "offset of the measurement resource in the first periodicity" may be understood as an adjustable range of the time unit occupied by the measurement resource in the first periodicity. The "start time domain location number of the measurement resource" may be understood as a number corresponding to a time resource that indicates that the second node starts measurement, for example, may be a number of a super frame that indicates that the second node starts measurement. The "quantity of measurement resources" may be understood as a quantity of time units corresponding to the time resource used by the second node to measure the synchronization information of the third node on the first channel, for example, may be a quantity of super frames, radio frames, symbols, or other time units.

For example, the first periodicity corresponding to the measurement resource may be 50 consecutive super frames, the duration of the measurement resource in the first periodicity may be 20 super frames in the 50 consecutive super frames, the offset of the measurement resource in the first periodicity may be 10 super frames, the start time domain location number of the measurement resource may be a number of a super frame 10 in the 50 consecutive super frames, and the quantity of measurement resources may be 20.

It should be noted that the synchronization procedure of the first node may be triggered by using a first event or periodically.

In a possible implementation, a process in which the first node sends the first measurement configuration information to the second node may be: sending the first measurement configuration information to the second node in response to detecting a first event, where the first event includes but is not limited to one or more of the following: The first node is powered on, communication quality of a communication system to which the first node belongs is lower than a preset standard, a software module of the first node is started based on a preset configuration, or the first node is in a status of not being synchronized with any node. In this implementation, a specific event may be used to trigger the first node to send the first measurement configuration information to the second node, so that time-frequency synchronization of the first node meets a service requirement of the first node, and a service of the first node is not affected.

In another possible implementation, a process in which the first node sends the first measurement configuration information to the second node may be: The first node sends the first measurement configuration information to the second node when a start time domain location of the first periodicity is reached. In this implementation, the first node periodically sends the first measurement configuration information to the second node, so that time-frequency synchronization of the first node is more appropriate.

It can be learned from the foregoing descriptions that the second node may be one or more nodes. In Case 1, the second node is a plurality of nodes, and the first node may send the first measurement configuration information to the second node in a multicast or unicast manner. Optionally, the first measurement configuration information may be sent at an interval of the first periodicity. Optionally, the first measurement configuration information may be carried in a system message. In Case 2, when the second node is one node, the first node may send the first measurement configuration information to the second node in a unicast manner.

S302: The second node obtains the synchronization information.

Refer to FIG. 4. In a possible implementation, step S302 specifically includes the following steps.

S302A: The second node may receive broadcast information of the third node.

S302B: The second node determines the synchronization information based on the broadcast information.

The broadcast information may include a plurality of types of information. The second node may select, from the broadcast information based on a type of the measurement object indicated by the first measurement configuration information, information corresponding to the measurement object as the synchronization information of the third node.

Example 1: If the measurement object indicated by the first measurement configuration information includes the synchronization communication domain set measurement and the time adjustment measurement, and the broadcast information received by the second node from the third node includes the synchronization communication domain set information and the time synchronization information, the second node uses the synchronization communication domain set information and the time synchronization information of the third node as the synchronization information.

Example 2: If the measurement object indicated by the first measurement configuration information includes the frequency adjustment measurement, and the broadcast information received by the second node from the third node includes the synchronization communication domain set information, the time synchronization information, and the frequency synchronization information, the second node uses the frequency synchronization information of the third node as the synchronization information.

Example 3: If the measurement object indicated by the first measurement configuration information includes the frequency adjustment measurement, the broadcast information received by the second node from the third node includes the synchronization communication domain set information, the time synchronization information, and the frequency synchronization information, but the frequency synchronization information includes only the carrier frequency of the third node, the second node may determine the frequency adjustment information based on an error between the carrier frequency of the third node and a carrier frequency of the second node, and determine the frequency adjustment information as the synchronization information.

In another possible implementation, the second node may receive the broadcast information of the third node, and directly use the broadcast information as the synchronization information of the third node.

For example, if the measurement object indicated by the first measurement configuration information includes the RSRP, the RSRQ, the SINR, the RSSI, the synchronization communication domain set measurement, the time adjustment measurement, and the frequency adjustment measurement, and the broadcast information received by the second node from the third node includes the RSRP, the RSRQ, the SINR, the RSSI, the synchronization communication domain set information, the time synchronization information, and the frequency synchronization information, the second node uses the broadcast information of the third node as the synchronization information.

S303: The second node sends the synchronization information to the first node. Correspondingly, the first node receives the synchronization information from the second node.

The synchronization information indicates one or more of the time synchronization information, the frequency synchronization information, the synchronization communication domain set information, the RSRP reference signal received power, the RSRQ reference signal received quality, the SINR signal to interference plus noise ratio, or the RSSI received signal strength indicator of the third node.

In embodiments of this application, the synchronization communication domain set information may be understood as information about a synchronization communication domain set formed by establishing time-frequency synchronization between a node on the first channel and another first-type node. In some possible embodiments, the synchronization communication domain set information may include but is not limited to one or more of the following: a topology relationship of the synchronization communication domain set, priority information of the third node, a quantity of first-type nodes included in the synchronization communication domain set, or a status of synchronization between the third node and a first-type node other than the third node in the synchronization communication domain set. For descriptions of the first-type node, refer to the foregoing descriptions. Details are not described herein again.

The topology relationship of the synchronization communication domain set may be understood as a relationship between a root node and a parent node in the synchronization communication domain set, and the topology relationship may be represented by a node identifier. The root node is an initial node in the synchronization communication domain set, and another node in the synchronization communication domain set directly or indirectly joins the synchronization communication domain set through the root node. A synchronization path is a connection path from the root node to a current node. For example, if the current node joins the synchronization communication domain set through the parent node, and the parent node joins the synchronization communication domain set through the root node, a synchronization path is formed by using the current node, the parent node, and the root node. The priority information of the third node may be understood as a priority of establishing time-frequency synchronization between the first node and the third node. The priority may be indicated by a node sequence, a node location, or a distance between the current node and the root node on a synchronization path in the synchronization communication domain set. The synchronization status may be understood as synchronization between the third node and the first-type node other than the third node in the synchronization communication domain set.

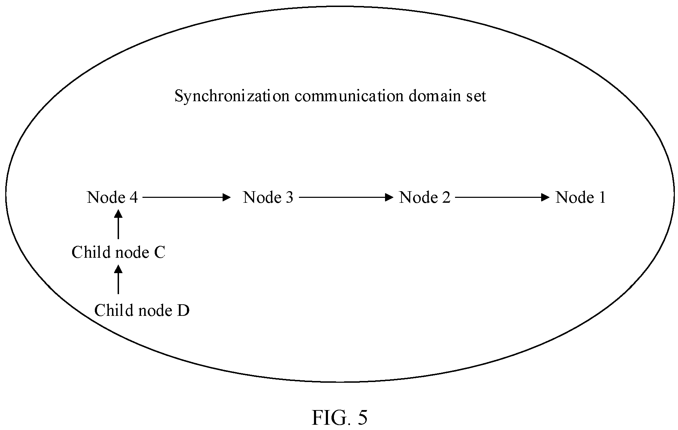

For example, refer to FIG. 5, FIG. 5 is a diagram of a topology relationship of a synchronization communication domain set. For example, a node 1 is a root node, a node 2 and a node 3 are parent nodes, a third node is a node 4, and the node 4 has a child node C and a child node D. A synchronization path of the node 4 is the node 4-the node 3-the node 2-the node 1. Correspondingly, a priority of the node 4 is lower than a priority of the node 3, the priority of the node 3 is lower than a priority of the node 2, the priority of the node 2 is lower than a priority of the node 1. A status of synchronization between the node 4 and other nodes in the communication domain set in which the node 4 is located is to directly or indirectly establish time-frequency synchronization with the node 3, the node 2, and the node 1 through the synchronization path.

For the time synchronization information and the frequency synchronization information, refer to the foregoing related descriptions. Details are not described herein again.

In the first communication method shown in FIG. 3, the first node may obtain the synchronization information of the third node on the first channel through the second node, so that synchronization information of a node on the first channel can be obtained without affecting the service of the first node, to implement time-frequency synchronization between a plurality of nodes.

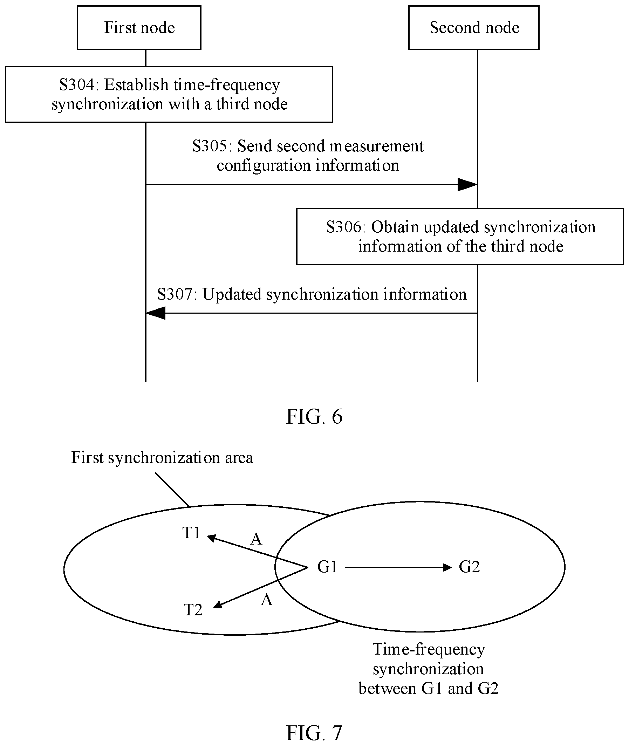

Optionally, as shown in FIG. 6, the first communication method further includes the following steps.

S304: The first node establishes time-frequency synchronization with the third node.

It can be learned from the foregoing descriptions that the time-frequency synchronization includes time synchronization and frequency synchronization.

In a possible implementation, the time synchronization information in the synchronization information includes the first time deviation between the third node and the first node. The first node may adjust a clock value of the first node based on the first time deviation, so that the difference between the clock values of the first node and the third node at the first moment falls within a first preset range. Alternatively, the first node may adjust a transmission start moment of a time unit of the first node based on the first time deviation, so that the error between the transmission start moments of the time units of the first node and the third node falls within a second preset range. The first preset range is different from the second preset range.

In another possible implementation, the time synchronization information in the synchronization information includes a clock value of the third node at the first moment and/or a transmission start moment of a time unit of the third node. The first node may determine the first time deviation between the third node and the first node based on the time synchronization information, and adjust a clock value of the first node based on the first time deviation, so that the difference between the clock values of the first node and the third node at the first moment falls within a first preset range. Alternatively, the first node may adjust a transmission start moment of a time unit of the first node based on the first time deviation, so that the error between the transmission start moments of the time units of the first node and the third node falls within a second preset range. The first preset range is different from the second preset range.

In a possible implementation, the frequency synchronization information in the synchronization information includes the first frequency deviation between the third node and the first node. The first node may adjust a carrier frequency of the first node based on the first frequency deviation, so that the carrier frequency error between the first node and the third node at the first moment falls within a third preset range.

In another possible implementation, the frequency synchronization information in the synchronization information includes a carrier frequency of the third node at the first moment. The first node may determine the first frequency deviation between the third node and the first node based on the frequency synchronization information, and adjust a carrier frequency of the first node based on the first frequency deviation, so that the carrier frequency error between the first node and the third node at the first moment falls within a third preset range.

S305: The first node sends second measurement configuration information to the second node. Correspondingly, the second node receives the second measurement configuration information. The second measurement configuration information indicates to measure updated synchronization information of the third node.

Similarly, when the second node is a plurality of nodes, the first node may send the second measurement configuration information to the second node in a multicast or unicast manner. When the second node is one node, the first node may send the second measurement configuration information to the second node in a unicast manner.

S306: The second node obtains the updated synchronization information of the third node.

It may be understood that a specific implementation in which the second node obtains the updated synchronization information of the third node is similar to the specific implementation in which the second node obtains the synchronization information of the third node in S302. Refer to the foregoing descriptions. Details are not described herein again.

S307: The second node sends the updated synchronization information to the first node. Correspondingly, the first node receives the updated synchronization information.

In embodiments of this application, the updated synchronization information indicates a second time deviation and/or a second frequency deviation between the third node and the first node. The second time deviation may be understood as a difference between clock values of the first node and the third node at a second moment, or may be understood as an error between transmission start moments of time units of the first node and the third node. The second frequency deviation may be understood as a carrier frequency error between the first node and the third node at the second moment.

Optionally, after receiving the updated synchronization information, the first node may re-establish time-frequency synchronization with the third node based on the updated synchronization information. In this way, the first node may obtain the updated synchronization information of the third node through the second node again, to implement synchronization tracking of the third node, so that time-frequency synchronization between the first node and the third node is more accurate.

It should be noted that, in the foregoing examples, an example in which the third node is one node is used to describe a process in which the first node establishes time-frequency synchronization with the third node. The following uses an example in which the third node is a plurality of nodes to describe a process in which the first node establishes time-frequency synchronization with the third node. Optionally, when the third node on the first channel is a plurality of nodes, the first node may select a fourth node from the plurality of third nodes, and establish time-frequency synchronization with the fourth node.

There are a plurality of cases in which the first node selects the fourth node from the plurality of third nodes, including but not limited to the following cases.

Case 1: The first node considers priorities of the plurality of third nodes, and the first node may use a node with a highest priority in the plurality of third nodes as the fourth node.

In embodiments of this application, priorities of different nodes may be preset.

In an example, a priority may be directly configured for each node. Alternatively, a priority may be indirectly configured for each node. For example, to facilitate synchronization between different nodes, a synchronization sequence is usually configured for each G node, and the synchronization sequence is used to perform time-frequency synchronization between different nodes. In embodiments of this application, each node may determine a priority of the node by using a synchronization sequence configured for the node. For example, a correspondence between a synchronization sequence and a priority may be preset. After obtaining a synchronization sequence configured for a terminal device, the terminal device may determine a priority of the node based on the synchronization sequence. For example, if a synchronization sequence preconfigured for a node G1 is a synchronization sequence A, and a priority corresponding to the synchronization sequence A is A, a priority of the node G1 may be A.

In another example, the priority may be indicated by the node sequence, the node location, or the distance between the current node and the root node on the synchronization path in the synchronization area. According to the foregoing descriptions, the synchronization path is a connection path from the root node to the current node. For example, if the current node joins the synchronization area through the parent node, and the parent node joins the synchronization area through the root node, the synchronization path is formed by the current node, the parent node, and the root node. In this case, in this example, a priority of the root node may be identified as 0, and in the synchronization area and on the synchronization path, the priority of the root node is the highest. In this case, the parent node has a priority of 1 (or a distance between the parent node and the root node is 1), and is second only to the root node; and the current node has a priority of 2 (or a distance between the current node and the root node is 2), and is second to the parent node. Herein, it is not limited to using a number like 0 or 1 for identification, and any information that can reflect a priority value may be used for priority identification. Based on this example, if there are a plurality of synchronization paths in the synchronization area, a plurality of different nodes that have a same distance from the root node may still have a same priority on different synchronization paths.

Optionally, each node may notify another node of the priority of the node. For example, in an implementation, each node may explicitly indicate the priority of the node to another node. For example, the node may send broadcast information or node information, where the broadcast information or the node information includes the priority of the node. Alternatively, in another implementation, each node may implicitly indicate the priority of the node to another node. Specifically, each node sends a synchronization signal in a broadcast manner to implement time-frequency synchronization between another node and the node. The synchronization signal includes a synchronization sequence, and the priority of each node may be implicitly indicated by the synchronization sequence. Certainly, in the foregoing descriptions, an example in which there is a correspondence between a synchronization sequence and a priority of a node and the synchronization sequence implicitly indicates the priority of the node is used for description, but this is not intended to limit embodiments of this application. Information that has a correspondence with the priority of the node may alternatively be other information. For example, the other information may be a root sequence of the synchronization sequence, or the like. In other words, the node priority may be implicitly indicated by the other information, for example, the root sequence of the synchronization sequence. In the following example descriptions, an example in which at least one node explicitly indicates a priority of the at least one node to the first node, that is, node information sent by the at least one node includes the priority of the node is used for description.

It may be understood that, in Case 1, a plurality of third nodes may have a same highest priority. The first node may select, according to a first preset rule, one third node from the plurality of third nodes with the highest priority as the fourth node. The first preset rule may be randomly selecting one node, or performing selecting based on signal strength of the plurality of third nodes and/or a quantity of nodes included in a synchronization area to which the third nodes belong, or the like. For example, the plurality of third nodes are a node A, a node B, and a node C. A priority of the node A is 2, and both priorities of the node B and the node C are 1. The priority 1 is higher than the priority 2. The first node may select, according to the first preset rule, one node from the node B and the node C as the second node or the like.

Case 2: The first node considers quantities of nodes included in communication domain sets to which the third nodes belong, and determines, as the fourth node, a third node for which a largest quantity of nodes included in a communication domain set.

For example, the plurality of third nodes are a node A, a node B, and a node C. A quantity of nodes included in a communication domain set A to which the node A belongs is N1, a quantity of nodes included in a communication domain set B to which the node B belongs is N2, and a quantity of nodes included in a communication domain set C to which the node C belongs is N3. N1, N2, and N3 are all positive integers. If a value of N3 is greater than values of N1 and N2, the first node may select the node C as the fourth node.

It may be understood that, in Case 2, there may be a case in which communication domain sets to which a plurality of third nodes belong include nodes of a same largest quantity. The foregoing example is still used. If values of N1 and N2 are the same and are greater than a value of N3, the first node needs to select one node from the node A and the node B as the fourth node. The first node may select, as the fourth node according to a second preset rule, one node from nodes for which communication domain sets to which the nodes belong include a largest quantity of nodes. The second preset rule may be randomly selecting one node, or performing selecting based on signal strength and/or priorities of the plurality of third nodes, or the like.

Case 3: The first node considers signal strength of the plurality of third nodes, and the first node may use a node with greatest signal strength in the plurality of third nodes as the fourth node.

The first node may select, from the plurality of third nodes, a node whose node information, broadcast information, or another channel or signal has the greatest signal strength as the fourth node. The signal strength of the node information may specifically refer to signal strength of node information received by the first node from another node, and the signal strength of the broadcast information may specifically refer to signal strength of broadcast information received by the first node. Specifically, the broadcast information may be a synchronization signal. Optionally, received signal strength of the first node = radio frequency transmit power + an antenna gain of a transmit end - a path loss - obstacle attenuation + an antenna end of a receive end. The received signal strength can be measured in decibels (decibel, dB) or decibels relative to one milliwatt (decibels relative to one milliwatt, dBm). For example, the plurality of third nodes are a node A and a node B. Signal strength, namely, received signal strength, of broadcast information received by the first node from the node A is 100 dBm, and signal strength, namely, received signal strength, of broadcast information received by the first node from the node B is 101 dBm. In this case, the first node may select the node B as the fourth node.

It may be understood that, in Case 3, a plurality of third nodes may have same highest received signal strength. The first node may select one node from the plurality of nodes as the fourth node according to a third preset rule. The third preset rule may be randomly selecting one node, or performing selecting based on priorities of a plurality of nodes and/or quantities of nodes included in synchronization communication domain sets to which the plurality of nodes belong, or the like.

In a possible implementation, after receiving the synchronization information, the first node may further send information about synchronization adjustment between the first node and the third node, where the synchronization adjustment information indicates the second-type node in the first synchronization area to establish time-frequency synchronization with the third node. It can be learned from the foregoing descriptions that the second-type node may be one or more nodes. Therefore, when the second node is a plurality of nodes, the first node may send the synchronization adjustment information to the second-type node in a broadcast or multicast manner. When the second node is one node, the first node may send the synchronization adjustment information to the second-type node in a unicast manner.

It may be understood that, in some embodiments, the time synchronization information in the synchronization information includes the time adjustment information (for example, the first time deviation), and the frequency synchronization information in the synchronization information includes the frequency adjustment information (for example, the first frequency deviation). The first node may send the synchronization information as the synchronization adjustment information and an adjustment effective moment to the second-type node. In some other embodiments, the time synchronization information in the synchronization information includes the time information (for example, the clock value at the first moment) of the third node, and the frequency synchronization information in the synchronization information includes the frequency information (for example, the carrier frequency) of the three nodes. The first node may further determine the frequency adjustment information (for example, the first frequency deviation), the time adjustment information (for example, the first time deviation), and a synchronization adjustment effective moment based on the synchronization information, and send the frequency adjustment information, the time adjustment information, and the synchronization adjustment effective moment as the synchronization adjustment information to the second-type node. In this implementation, the first node sends the synchronization adjustment information to the second-type node in the first synchronization area to which the first node belongs, so that the second-type node may establish time-frequency synchronization with the third node, to further implement time-frequency synchronization between a plurality of nodes.

For example, refer to FIG. 7. In FIG. 7, an example in which the first node is a node G1, the third node is a node G2, and the second-type node is a node T1 and a node T2 is used. Before the node G1 establishes time-frequency synchronization with the node G2, the node G1, the node T1, and the node T2 have established time-frequency synchronization, and form a first synchronization area. Therefore, after the node G1 receives synchronization information of the node G2, if time synchronization information in the synchronization information includes time adjustment information, and frequency synchronization information in the synchronization information includes frequency adjustment information, the node G1 may send the synchronization information and an adjustment effective moment as synchronization adjustment information A to the node T1 and the node T2. Alternatively, if time synchronization information in the synchronization information includes time information, and frequency synchronization information in the synchronization information includes frequency information, the node G1 may further determine frequency adjustment information and time adjustment information based on the synchronization information, and send the frequency adjustment information, the time adjustment information, and an adjustment effective moment as synchronization adjustment information A to the node T1 and the node T2. Correspondingly, after receiving the synchronization adjustment information A, the node T1 and the node T2 may establish time-frequency synchronization with the node G2 based on the synchronization adjustment information A.

### Embodiment 2

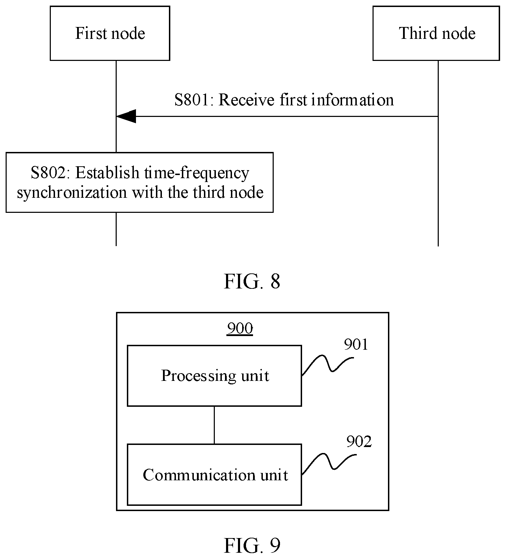

FIG. 8 is a schematic flowchart of the second communication method according to an embodiment of this application. In the following description process, an example in which a first node in a short-range communication system establishes time-frequency synchronization is used for description. Optionally, the first node and the third node may be G nodes in a wireless short-range communication system. The method includes the following steps.

S801: The first node receives first information from a third node, where the first information indicates one or more of the following information of the third node: time synchronization information, frequency synchronization information, synchronization communication domain set information, RSRP, RSRQ, an SINR, or an RSSI; and establishes time-frequency synchronization with the third node.

In a possible implementation, the first information is carried in a broadcast message, a unicast message, or a multicast message. In other words, the third node may send synchronization information to the first node in a plurality of manners.

S802: The first node establishes time-frequency synchronization with the third node.

For a specific process of establishing time-frequency synchronization between the first node and the third node, refer to the foregoing related descriptions of S304. Only the "synchronization information" needs to be replaced with the "first information". Details are not described herein again.

It may be understood that the communication method shown in FIG. 8 is applicable to a scenario in which the first node is just powered on and has not established a service or a scenario in which a service of the first node is in an idle state (for example, in the early morning or no terminal node is currently connected). Therefore, according to the method in this embodiment of this application, the first node may directly obtain synchronization information of the third node from the third node, and establish time-frequency synchronization with the third node. This effectively improves efficiency of establishing time-frequency synchronization by the first node.

It may be understood that, in embodiments shown in FIG. 8, there may be a plurality of third nodes, that is, the first node may receive first information from the plurality of third nodes, and the first node may select a fourth node from the plurality of third nodes, and establish time-frequency synchronization with the fourth node. For a specific process, refer to the foregoing related descriptions. Details are not described herein again.

The foregoing describes in detail the communication methods provided in embodiments of this application. The following describes in detail apparatuses provided in embodiments of this application with reference to specific accompanying drawings. It should be understood that descriptions of the apparatus embodiments correspond to the descriptions of the method embodiments. Therefore, for content that is not described in detail, refer to each other.

FIG. 9 is a block diagram of an apparatus 900 according to an embodiment of this application. The apparatus is configured to implement functions of the first node or the second node in the method embodiments. For example, the apparatus may be a software module or a chip system. The chip system may include a chip, or may include a chip and another discrete device. The apparatus 900 includes a processing unit 901 and a communication unit 902. The communication unit 902 is configured to communicate with another device, and may also be referred to as a communication interface, a transceiver unit, an input/output interface, or the like.

In Case 1, when the apparatus 900 is configured to implement the functions of the first node in the method embodiment 1, the apparatus 900 may be the first node, or a chip, a circuit, or the like configured in the first node. The processing unit 901 is configured to perform processing-related operations of the first node in the method embodiment 1, and the communication unit 902 is configured to perform sending and receiving-related operations of the first node in the method embodiment 1.

When the apparatus 900 is configured to implement the functions of the first node in the method embodiment 1, the communication unit 902 may be configured to send first measurement configuration information to a second node, where the first measurement configuration information indicates to measure synchronization information of a third node on a first channel; and receive the synchronization information from the second node, where the synchronization information indicates one or more of the following information of the third node: time synchronization information, frequency synchronization information, synchronization communication domain set information, RSRP, RSRQ, an SINR, or an RSSI.

Optionally, the time synchronization information includes a first time deviation between the third node and the first node.

Optionally, the frequency synchronization information includes a first frequency deviation between the third node and the first node.

Optionally, the synchronization communication domain set information includes one or more of the following: a topology relationship of a synchronization communication domain set, priority information of the third node, a quantity of first-type nodes included in the synchronization communication domain set, or a status of synchronization between the third node and a first-type node other than the third node in the synchronization communication domain set.

In a possible implementation, the first measurement configuration information further indicates a measurement object, a first periodicity corresponding to a measurement resource, duration of the measurement resource in the first periodicity, an offset of the measurement resource in the first periodicity, a start time domain location number of the measurement resource, or a quantity of measurement resources. The measurement object includes one or more of the following: the reference signal received power, the reference signal received quality, the signal to interference plus noise ratio, the received signal strength indicator, synchronization communication domain set measurement, time adjustment measurement, or frequency adjustment measurement, where the measurement resource is a time resource for measuring the first channel.

In a possible implementation, the synchronization information is for establishing time-frequency synchronization between the first node and the third node.

Optionally, the communication unit 902 may be further configured to send information about synchronization adjustment between the first node and the third node, where the synchronization adjustment information indicates a second-type node in a first synchronization area to establish time-frequency synchronization with the third node, and the first synchronization area is a synchronization area to which the first node belongs.

Optionally, the communication unit 902 may be further configured to: after the first node establishes time-frequency synchronization with the third node, send second measurement configuration information to the second node, where the second measurement configuration information indicates to measure updated synchronization information of the third node; and receive the updated synchronization information from the second node, where the updated synchronization information indicates a second time deviation and/or a second frequency deviation between the third node and the first node.

In a possible implementation, the processing unit 901 may determine the second node based on a service priority and/or load information of the second-type node in the first synchronization area.

In a possible implementation, when being configured to send the first measurement configuration information to the second node, the communication unit 902 is specifically configured to: send the first measurement configuration information to the second node in response to a first event detected by the processing unit 901, where the first event includes one or more of the following: The first node is powered on, communication quality of a communication system to which the first node belongs is lower than a preset standard, a software module of the first node is started based on a preset configuration, or the first node is in a status of not being synchronized with any node; or send the first measurement configuration information to the second node when a start time domain location of the first periodicity is reached.

In Case 2, when the apparatus 900 is configured to implement the functions of the second node in the method embodiment 1, the apparatus 900 may be the second node, or a chip, a circuit, or the like configured in the second node. The processing unit 901 is configured to perform processing-related operations of the second node in the method embodiment 1, and the communication unit 902 is configured to perform sending and receiving-related operations of the second node in the method embodiment 1.

In a possible implementation, the communication unit 902 is configured to: receive a first measurement configuration apparatus, where the first measurement configuration information is for measuring synchronization information of a third node on a first channel; obtain the synchronization information, where the synchronization information indicates one or more of the following information of the third node: time synchronization information, frequency synchronization information, synchronization communication domain set information, RSRP, RSRQ, an SINR, or an RSSI; and send the synchronization information to a first node.

In a possible implementation, the communication unit 902 is further configured to receive information about synchronization adjustment between the first node and the third node, where the synchronization adjustment information is for establishing time-frequency synchronization between the second node and the third node, and the second node and the first node belong to a first synchronization area.

In a possible implementation, the communication unit 902 is further configured to: receive second measurement configuration information, where the second measurement configuration information is for measuring updated synchronization information of the third node; obtain the updated synchronization information; and send the updated synchronization information to the first node, where the updated synchronization information indicates a second time deviation and/or a second frequency deviation between the third node and the first node.

In Case 3, when the apparatus 900 is configured to implement the functions of the first node in the method embodiment 2, the apparatus 900 may be the first node, or a chip, a circuit, or the like configured in the first node. The processing unit 901 is configured to perform processing-related operations of the first node in the method embodiment, and the communication unit 902 is configured to perform sending and receiving-related operations of the first node in the method embodiment 2.

The communication unit 902 is configured to receive first information from a third node, where the first information indicates one or more of the following information of the third node: time synchronization information, frequency synchronization information, synchronization communication domain set information, RSRP, RSRQ, an SINR, or an RSSI; and establish time-frequency synchronization with the third node.

In a possible implementation, the first information is carried in a broadcast message, a unicast message, or a multicast message. In other words, the third node may send the synchronization information to the first node in a plurality of manners.

In embodiments of this application, division into the units is an example, and is merely logical function division. In an actual implementation, another division manner may be used. In addition, functional units in embodiments of this application may be integrated into one processor, or each of the units may exist alone physically, or two or more units are integrated into one unit. The integrated unit may be implemented in a form of hardware, or may be implemented in a form of a software functional unit.

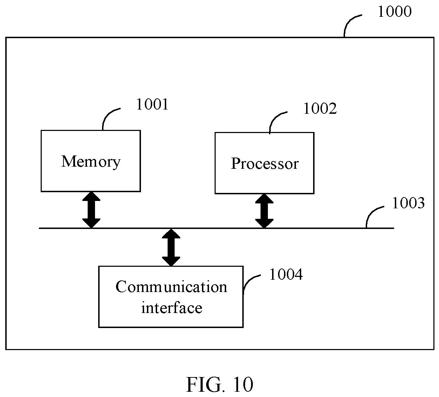

FIG. 10 is a diagram of an apparatus 1000 according to an embodiment of this application. The apparatus 1000 may be a first node or a second node, or a component in a first node or a second node, for example, a chip or an integrated circuit. The apparatus 1000 may include at least one processor 1002 and a communication interface 1004. Further, optionally, the apparatus may further include at least one memory 1001. Further, optionally, a bus 1003 may be further included. The memory 1001, the processor 1002, and the communication interface 1004 are connected through the bus 1003.

The memory 1001 is configured to provide storage space, and the storage space may store data such as an operating system and a computer program. The memory 1001 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), and the like.

The processor 1002 is a module for performing an arithmetic operation and/or a logical operation, and may be specifically one or a combination of a plurality of processing modules such as a central processing unit (central processing unit, CPU), a graphics processing unit (graphics processing unit, GPU), a microprocessor (microprocessor unit, MPU), an application-specific integrated circuit (application-specific integrated circuit, ASIC), a field programmable gate array (field programmable gate array, FPGA), a complex programmable logic device (complex programmable logic device, CPLD), a synergistic processing unit (assisting the central processing unit in completing corresponding processing and application), and a microcontroller unit (microcontroller unit, MCU).

The communication interface 1004 may be configured to provide an information input or output for the at least one processor, and/or the communication interface may be configured to receive data sent from the outside and/or send data to the outside, and may be a wired link interface including an Ethernet cable or the like, or may be a wireless link (Wi-Fi, Bluetooth, universal wireless transmission, a vehicle-mounted short-range communication technology, or the like) interface. Optionally, the communication interface 1004 may further include a transmitter (for example, a radio frequency transmitter or an antenna), a receiver, or the like coupled to the interface.

In some embodiments, the apparatus 1000 may be the first node or a component in the first node in the method embodiment 1, for example, a chip or an integrated circuit. The processor 1002 in the apparatus 1000 is configured to read the computer program stored in the memory 1001, and control the first node to perform the following operations: sending first measurement configuration information to a second node, where the first measurement configuration information indicates to measure synchronization information of a third node on a first channel; and receiving the synchronization information from the second node, where the synchronization information indicates one or more of the following information of the third node: time synchronization information, frequency synchronization information, synchronization communication domain set information, RSRP, RSRQ, an SINR, or an RSSI. For specific details, refer to the descriptions in the method embodiments, and details are not described again.

In some other embodiments, the apparatus 1000 may be the second node or a component in the second node in the method embodiment 1, for example, a chip or an integrated circuit. The processor 1002 in the apparatus 1000 is configured to read the computer program stored in the memory 1001, and control the second node to perform the following operations: receiving a first measurement configuration apparatus, where the first measurement configuration information is for measuring synchronization information of a third node on a first channel; obtaining the synchronization information, where the synchronization information indicates one or more of the following information of the third node: time synchronization information, frequency synchronization information, synchronization communication domain set information, RSRP, RSRQ, an SINR, or an RSSI; and sending the synchronization information to a first node. For specific details, refer to the descriptions in the method embodiments, and details are not described again.

In some other embodiments, the apparatus 1000 may be the first node or a component in the first node in the method embodiment 2, for example, a chip or an integrated circuit. The processor 1002 in the apparatus 1000 is configured to read the computer program stored in the memory 1001, and control the second node to perform the following operations: receiving first information from a third node, where the first information indicates one or more of the following information of the third node: time synchronization information, frequency synchronization information, synchronization communication domain set information, RSRP, RSRQ, an SINR, or an RSSI; and establishing time-frequency synchronization with the third node. For specific details, refer to the descriptions in the method embodiments, and details are not described again.

An embodiment of this application further provides a terminal. The terminal may be an intelligent cockpit device, a smart home device, an intelligent manufacturing device, a vehicle, or the like. It may alternatively be understood that the "vehicle-mounted wireless short-range communication system" technology may be applied to a short-range communication system in the non-vehicle-mounted field. The terminal includes a first node and/or a second node, and the first node and the second node may be respectively the first node and the second node in embodiments shown in FIG. 3. The first node and the second node may be of a same type or different types. For example, in some embodiments, if the first node and the second node are of different types, the first node may be one or more of modules such as a camera, a screen, a microphone, an acoustic device, a radar, an electronic key, a passive entry passive start system controller, and user equipment UE. The second node may be a base station, a vehicle cockpit domain controller (cockpit domain controller, CDC), or the like. Alternatively, in some embodiments, if the first node and the second node are of a same type, the first node and the second node each may be a base station, a CDC, or the like. Alternatively, the first node and the second node each may be one or more of modules such as a camera, a screen, a microphone, an acoustic device, a radar, an electronic key, a passive entry passive start system controller, and user equipment UE. Optionally, the terminal may be an unmanned aerial vehicle, a robot, a device in a smart home scenario, a device in an intelligent manufacturing scenario, or the like.

Further, an embodiment of this application further provides an apparatus, including units configured to implement the foregoing embodiments. Alternatively, the apparatus includes a processor and an interface circuit. The processor is configured to communicate with another apparatus through the interface circuit, and perform the methods in the foregoing method embodiments. Alternatively, the apparatus includes a processor, configured to invoke a program stored in a memory, to perform the methods described in the foregoing embodiments.

An embodiment of this application further provides a computer-readable storage medium, including readable instructions. When the readable instructions are run on a computer, the computer is enabled to perform the methods described in the foregoing embodiments.

An embodiment of this application further provides a chip system. The chip system includes at least one processor and an interface circuit. Further, optionally, the chip system may further include a memory or an external memory. The processor is configured to execute instructions and/or data exchange through the interface circuit, to implement the methods in the foregoing method embodiments. The chip system may include a chip, or may include a chip and another discrete device.

An embodiment of this application further provides a computer program product, including instructions. When the instructions are run on a computer, the computer is enabled to perform the methods described in the foregoing embodiments.

In embodiments of this application, the processor may be a general-purpose processor, a digital signal processor, an application-specific integrated circuit, a field programmable gate array or another programmable logic device, a discrete gate or transistor logic device, a discrete hardware component, or a synergistic processing unit, and may implement or execute the methods, steps, and logical block diagrams disclosed in embodiments of this application. The general purpose processor may be a microprocessor or any conventional processor or the like. The steps of the methods disclosed with reference to embodiments of this application may be directly performed by a hardware processor, or may be performed by a combination of hardware and software modules in the processor.

In embodiments of this application, the memory may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of an instruction or a data structure and that can be accessed by a computer. However, this is not limited thereto. The memory in embodiments of this application may alternatively be a circuit or any other apparatus that can implement a storage function, and is configured to store the program instructions and/or the data.

All or some of the methods in embodiments of this application may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A communication method, applied to a first node, wherein the method comprises:
sending first measurement configuration information to a second node, wherein the first measurement configuration information indicates to measure synchronization information of a third node on a first channel; and
receiving the synchronization information from the second node, wherein the synchronization information indicates one or more of the following information of the third node: time synchronization information, frequency synchronization information, synchronization communication domain set information, reference signal received power RSRP, reference signal received quality RSRQ, a signal to interference plus noise ratio SINR, or a received signal strength indicator RSSI.

2. The method according to claim 1, wherein the time synchronization information comprises a first time deviation between the third node and the first node.

3. The method according to claim 1 or 2, wherein the frequency synchronization information comprises a first frequency deviation between the third node and the first node.

4. The method according to any one of claims 1 to 3, wherein the synchronization communication domain set information comprises one or more of the following: a topology relationship of a synchronization communication domain set, priority information of the third node, a quantity of first-type nodes comprised in the synchronization communication domain set, or a status of synchronization between the third node and a first-type node other than the third node in the synchronization communication domain set.

5. The method according to any one of claims 1 to 4, wherein the first measurement configuration information further indicates a measurement object, a first periodicity corresponding to a measurement resource, duration of the measurement resource in the first periodicity, an offset of the measurement resource in the first periodicity, a start time domain location number of the measurement resource, or a quantity of measurement resources; and
the measurement object comprises one or more of the following: the reference signal received power, the reference signal received quality, the signal to interference plus noise ratio, the received signal strength indicator, synchronization communication domain set measurement, time adjustment measurement, or frequency adjustment measurement, wherein the measurement resource is a time resource for measuring the first channel.

6. The method according to any one of claims 1 to 5, wherein the synchronization information is for establishing time-frequency synchronization between the first node and the third node.

7. The method according to any one of claims 1 to 6, wherein the method further comprises:
sending information about synchronization adjustment between the first node and the third node, wherein the synchronization adjustment information indicates a second-type node in a first synchronization area to establish time-frequency synchronization with the third node, wherein
the first synchronization area is a synchronization area to which the first node belongs.

8. The method according to claim 6 or 7, wherein after the first node establishes time-frequency synchronization with the third node, the method further comprises:
sending second measurement configuration information to the second node, wherein the second measurement configuration information indicates to measure updated synchronization information of the third node; and
receiving the updated synchronization information from the second node, wherein the updated synchronization information indicates a second time deviation and/or a second frequency deviation between the third node and the first node.

9. The method according to claim 7 or 8, wherein the method further comprises:
determining the second node based on a service priority and/or load information of the second-type node in the first synchronization area.

10. The method according to any one of claims 5 to 9, wherein the sending first measurement configuration information to a second node comprises:
sending the first measurement configuration information to the second node in response to detecting a first event, wherein
the first event comprises one or more of the following: the first node is powered on, communication quality of a communication system to which the first node belongs is lower than a preset standard, a software module of the first node is started based on a preset configuration, or the first node is in a status of not being synchronized with any node; or
sending the first measurement configuration information to the second node when a start time domain location of the first periodicity is reached.

11. A communication method, applied to a second node and comprising:
receiving a first measurement configuration apparatus, wherein the first measurement configuration information is for measuring synchronization information of a third node on a first channel;
obtaining the synchronization information, wherein the synchronization information indicates one or more of the following information of the third node: time synchronization information, frequency synchronization information, synchronization communication domain set information, reference signal received power RSRP, reference signal received quality RSRQ, a signal to interference plus noise ratio SINR, or a received signal strength indicator RSSI; and
sending the synchronization information to a first node.

12. The method according to claim 11, wherein the time synchronization information comprises a first time deviation between the third node and the first node.

13. The method according to claim 11 or 12, wherein the frequency synchronization information comprises a first frequency deviation between the third node and the first node.

14. The method according to any one of claims 11 to 13, wherein the synchronization communication domain set information comprises one or more of the following: a topology relationship of a synchronization communication domain set, priority information of the third node, a quantity of first-type nodes comprised in the synchronization communication domain set, or a status of synchronization between the third node and a first-type node other than the third node in the synchronization communication domain set.

15. The method according to any one of claims 11 to 14, wherein the first measurement configuration information further indicates a measurement object, a first periodicity corresponding to a measurement resource, duration of the measurement resource in the first periodicity, an offset of the measurement resource in the first periodicity, a start time domain location number of the measurement resource, or a quantity of measurement resources; and
the measurement object comprises one or more of the following: the reference signal received power, the reference signal received quality, the signal to interference plus noise ratio, the received signal strength indicator, synchronization communication domain set measurement, time adjustment measurement, or frequency adjustment measurement, wherein the measurement resource is a time resource for measuring the first channel.

16. The method according to any one of claims 11 to 15, wherein the synchronization information is for establishing time-frequency synchronization between the first node and the third node.

17. The method according to any one of claims 11 to 16, wherein the method further comprises:
receiving information about synchronization adjustment between the first node and the third node, wherein the synchronization adjustment information is for establishing time-frequency synchronization between the second node and the third node, wherein
the second node and the first node belong to a first synchronization area.

18. The method according to any one of claims 11 to 17, wherein the method further comprises:
receiving second measurement configuration information, wherein the second measurement configuration information is for measuring updated synchronization information of the third node;
obtaining the updated synchronization information; and
sending the updated synchronization information to the first node, wherein the updated synchronization information indicates a second time deviation and/or a second frequency deviation between the third node and the first node.

19. A communication apparatus, comprising a unit configured to implement the method according to any one of claims 1 to 10.

20. A communication apparatus, comprising a unit configured to implement the method according to any one of claims 11 to 18.

21. A chip system, comprising at least one processor and an interface circuit, wherein the processor is configured to execute instructions and/or data exchange through the interface circuit, so that the chip system performs the method according to any one of claims 1 to 10.

22. A chip system, comprising at least one processor and an interface circuit, wherein the processor is configured to execute instructions and/or data exchange through the interface circuit, so that the chip system performs the method according to any one of claims 11 to 18.

23. A terminal, comprising the apparatus according to claim 19 or the chip system according to claim 21, and/or the apparatus according to claim 20 or the chip system according to claim 22.

24. A computer-readable storage medium, wherein the computer-readable storage medium stores instructions, and when the instructions are run on a computer, the computer is enabled to perform the method according to any one of claims 1 to 10.

25. A computer-readable storage medium, wherein the computer-readable storage medium stores instructions, and when the instructions are run on a computer, the computer is enabled to perform the method according to any one of claims 11 to 18.
